# FASCICULE DE BREVET EUROPEEN

(11) **EP 3 423 840 B1**
(45) Date de publication et mention de la délivrance du brevet: **20.05.2020**
(21) Numéro de dépôt: 17713719.7
(22) Date de dépôt: 28.02.2017
(51) Int. Cl.: G01N 35/04, G01N 35/00

(54) **SYSTÈME D'ANALYSE AUTOMATIQUE POUR DIAGNOSTIC IN VITRO**
AUTOMATISCHES ANALYSESYSTEM FÜR IN-VITRO-DIAGNOSTIK
AUTOMATIC ANALYSING SYSTEM FOR IN VITRO DIAGNOSTICS

(30) Priorité: 01.03.2016 FR 1651736
(43) Date de publication de la demande: 09.01.2019
(73) Titulaire: ARTEION, 75007 Paris (FR)
(72) Inventeur: PARAGEAUD, Bertrand, 49240 Avrillé (FR)
(74) Mandataire: Verriest, Philippe
(86) Numéro de dépôt international: PCT/FR2017/050440
(87) Numéro de publication internationale: WO 2017/149234

(56) Documents cités:
- US-A- 3 270 202
- US-A- 3 722 719
- US-A- 3 855 473
- US-A- 3 859 528
- US-A- 5 762 872
- US-A1- 2011 158 777

## Description

La présente invention concerne un système d'analyse automatique pour diagnostic in vitro.

Un système d'analyse automatique pour diagnostic in vitro, comprend de façon connue :
- un dispositif de stockage configuré pour stocker une pluralité de cuvettes de réaction destinées à contenir des échantillons de liquides biologiques à analyser,
- une pluralité de postes de traitement d'échantillons destinés à recevoir des cuvettes de réaction afin de réaliser des traitements des échantillons de liquides biologiques contenus dans les cuvettes de réaction, tels que des dilutions, des extractions et/ou des mesures par exemple optiques,
- un ou plusieurs dispositifs de prélèvement et de pipetage agencés pour alimenter les cuvettes de réaction en échantillons de liquide biologique et/ou en produits réactifs, et
- un dispositif de préhension configuré pour saisir et transporter une cuvette de réaction en différents points du système d'analyse automatique, et notamment entre le dispositif de stockage et les différents postes de traitement d'échantillons, et entre les différents postes de traitement d'échantillons.

Un tel dispositif de préhension comprend notamment une tête de préhension montée mobile verticalement. La tête de préhension est plus particulièrement configurée pour être positionnée au-dessus d'une cuvette de réaction, et pour saisir fermement une partie supérieure de la cuvette de réaction, afin de pourvoir la déplacer.

Afin de réduire les risques de conflits entre le dispositif de préhension et les dispositifs de prélèvement et de pipetage, il est connu d'augmenter soit la longueur du corps de support supportant la tête de préhension, soit la longueur des bras de pipetage des dispositifs de prélèvement et de pipetage. Un tel allongement du corps de support ou des bras de pipetage nuit cependant à la compacité et à la fiabilité du système d'analyse automatique.

La présente invention vise à remédier à ces inconvénients.

US 3,270,202 et US 3,722,719 divulguent un système d'analyse automatique pour diagnostic in vitro comprenant:
- une pluralité de cuvettes de réaction comprenant chacune une embase et destinées à contenir des échantillons de liquides biologiques à analyser,
- un dispositif de stockage configuré pour stocker la pluralité de cuvettes de réaction,
- au moins un poste de traitement d'échantillons comprenant au moins une cavité de réception configurée pour recevoir et loger au moins en partie une cuvette de réaction, l'au moins une cavité de réception comprenant une ouverture d'introduction inférieure débouchant vers le bas et configurée pour permettre l'introduction d'une cuvette de réaction dans l'au moins une cavité de réception, et
- un dispositif de déplacement configuré pour déplacer une cuvette de réaction, le dispositif de déplacement étant en outre configuré pour décharger une cuvette de réaction hors du dispositif de stockage et pour charger et décharger une cuvette de réaction dans et hors de l'au moins une cavité de réception de l'au moins un poste de traitement d'échantillons via l'ouverture d'introduction inférieure respective, le dispositif de déplacement étant disposé sous l'au moins un poste de traitement d'échantillons et comprenant un organe d'entraînement monté mobile selon une direction de déplacement sensiblement verticale, l'organe d'entraînement étant configuré pour coopérer avec l'embase d'une cuvette de réaction et pour transmettre un mouvement d'entraînement à ladite cuvette de réaction.

Le problème technique à la base de l'invention consiste donc à fournir un système d'analyse automatique pour diagnostic in vitro qui soit de structure simple et compacte, tout en assurant une fiabilité optimale des mesures effectuées à l'aide d'un tel système d'analyse automatique.

A cet effet, la présente invention concerne un système d'analyse automatique pour diagnostic in vitro selon la revendication 1.

Une telle configuration du dispositif de déplacement et de l'au moins un poste de traitement d'échantillons permet de manipuler les cuvettes de réaction par le dessous, et donc d'éviter tout risque de conflit entre le dispositif de déplacement et des dispositifs de prélèvement et de pipetage appartenant au système d'analyse automatique. Ces dispositions permettent d'améliorer grandement la fiabilité et la simplicité du système d'analyse automatique.

Une telle configuration du dispositif de déplacement et de l'au moins un poste de traitement d'échantillons permet également d'améliorer la compacité du système d'analyse automatique, et de déplacer rapidement et précisément les cuvettes de réaction en différents points du système d'analyse.

En outre, la configuration du système d'analyse automatique selon la présente invention permet de mettre en œuvre des zones d'incubation et des zones de mesure séparées, et donc à des températures différentes.

De plus, une telle configuration du dispositif de déplacement et de l'au moins un poste de traitement d'échantillons permet de limiter les risques de contamination des cuvettes de réaction lors de leurs déplacements.

Le système d'analyse automatique peut en outre présenter une ou plusieurs des caractéristiques suivantes, prises seules ou en combinaison.

Selon un mode de réalisation de l'invention, l'au moins un poste de traitement d'échantillons est un poste d'analyse et/ou de mesure pour diagnostic in vitro, et par exemple pour réaliser des tests sanguins, tels que des tests sur sang total.

Selon un mode de réalisation de l'invention, le dispositif de déplacement est configuré pour déplacer une cuvette de réaction selon des déplacements cartésiens.

Selon un mode de réalisation de l'invention, l'organe d'entraînement est configuré pour supporter une cuvette de réaction.

Selon un mode de réalisation de l'invention, l'embase de chaque cuvette de réaction comprend un logement de réception débouchant vers le bas, l'organe d'entraînement étant configuré pour être reçu au moins en partie dans le logement de réception d'une cuvette de réaction.

Selon un mode de réalisation de l'invention, le dispositif de déplacement comprend des premiers moyens d'entraînement en translation configurés pour entraîner en translation le premier élément de support selon la première direction de déplacement, des deuxièmes moyens d'entraînement en translation configurés pour entraîner en translation le deuxième élément de support selon la deuxième direction de déplacement, et des troisièmes moyens d'entraînement en translation configurés pour entraîner en translation l'organe d'entraînement selon la troisième direction de déplacement.

Selon un mode de réalisation de l'invention, le système d'analyse automatique comprend une pluralité de postes de traitement d'échantillons comprenant chacun au moins une cavité de réception.

Selon un mode de réalisation de l'invention, le dispositif de déplacement comprend des moyens d'aspiration configurés pour retenir une cuvette de réaction sur l'organe d'entraînement lors des déplacements de ladite cuvette de réaction.

Selon un mode de réalisation de l'invention, les moyens d'aspiration comporte un orifice d'aspiration prévu sur l'organe d'entraînement et destiné à être relié à une source de dépression.

Selon un mode de réalisation de l'invention, chaque cavité de réception comprend au moins un élément de retenue configuré pour retenir une cuvette de réaction reçue dans ladite cavité de réception.

Selon un mode de réalisation de l'invention, l'au moins un élément de retenue est configuré pour coopérer par frottement avec une paroi latérale d'une cuvette de retenue reçue dans la cavité de réception respective.

Selon un mode de réalisation de l'invention, les cuvettes de réaction destinées à être stockées dans le dispositif de stockage sont reliées entre elles par un film d'obturation flexible de manière à former une plaque de cuvettes de réaction, les cuvettes de réaction de ladite plaque étant disposées en matrice, le film d'obturation flexible obturant des ouvertures) desdites cuvettes de réaction. La présence d'un tel film d'obturation flexible permet d'une part de faciliter la manipulation des cuvettes de réaction avant leur chargement dans le dispositif de stockage, et d'autre part de réduire fortement les évaporations des liquides contenus dans les cuvettes de réaction et les risque de contaminations des cuvettes de réaction et de leur contenu.

Selon un mode de réalisation de l'invention, les cuvettes de réaction de ladite plaque sont juxtaposées.

Selon un mode de réalisation de l'invention, le film d'obturation flexible comprend une pluralité de lignes de prédécoupe délimitant une pluralité de portions d'obturation, chaque portion d'obturation obturant l'ouverture d'une cuvette de réaction respective.

Selon un mode de réalisation de l'invention, le film d'obturation flexible comprend une première série de lignes de prédécoupe s'étendant entre des rangées de cuvettes de réaction et une deuxième série de lignes de prédécoupe s'étendant entre des colonnes de cuvettes de réaction. Les lignes de prédécoupe de la première série s'étendent avantageusement sensiblement orthogonalement aux lignes de prédécoupe de la deuxième série.

Selon un mode de réalisation de l'invention, le dispositif de déplacement est configuré pour soulever une cuvette de réaction stockée dans le dispositif de stockage de manière à rompre les lignes de prédécoupe délimitant la portion d'obturation respective.

Selon un mode de réalisation de l'invention, le dispositif de stockage comprend un organe de butée comprenant un trou de passage, le dispositif de stockage étant configuré de telle sorte que, lors du soulèvement d'une cuvette de réaction stockée dans le dispositif de stockage par le dispositif de déplacement, l'organe de butée maintient en position les cuvettes de réaction adjacentes à la cuvette de réaction soulevée et le trou de passage autorise le passage d'au moins une partie de la cuvette de réaction soulevée.

Selon un mode de réalisation de l'invention, chaque cuvette de réaction comprend, sur chacune de ses parois latérales, au moins une nervure de positionnement configurée pour coopérer avec une cuvette de réaction adjacente, de manière à ménager au moins un espace entre les ouvertures de deux cuvettes de réaction adjacentes. Les nervures de positionnement sont en outre configurées pour protéger les surfaces optiques des cuvettes de réaction avant et après l'assemblage desdites cuvettes de réaction.

Selon un mode de réalisation de l'invention, chaque nervure de positionnement est configurée pour coopérer avec une nervure de positionnement d'une cuvette de réaction adjacente, de manière à ménager l'au moins un espace respectif.

Selon un mode de réalisation de l'invention, les nervures de positionnement de chaque cuvette de réaction sont sensiblement parallèles.

Selon un mode de réalisation de l'invention, l'au moins une nervure de positionnement prévue sur chaque paroi latérale d'une cuvette de réaction est décalée latéralement par rapport à l'au moins une nervure de positionnement prévue sur la paroi latérale opposée de ladite cuvette de réaction. Ces dispositions permettent de faciliter le positionnement des cuvettes de réaction en lignes et rangées, tout en permettant de repérer automatiquement un défaut de positionnement d'une cuvette de réaction, par exemple dans un bol vibrant.

Selon un mode de réalisation de l'invention, chaque nervure de positionnement s'étend sur au moins une partie de la hauteur, et par exemple sur sensiblement toute la hauteur, de la cuvette de réaction respective.

Selon un mode de réalisation de l'invention, le film d'obturation flexible est fixé sur les bords supérieurs des cuvettes de réaction. Cette fixation peut par exemple être réalisée par collage, soudage ou scellage.

Selon un mode de réalisation de l'invention, le système d'analyse automatique comprend en outre un dispositif d'incubation comprenant une pluralité de cavités d'incubation configurées chacune pour recevoir et loger au moins en partie une cuvette de réaction, chaque cavité d'incubation comprenant une ouverture d'introduction inférieure débouchant vers le bas et configurée pour permettre l'introduction d'une cuvette de réaction dans la cavité d'incubation respective, le dispositif de déplacement étant configuré pour charger et décharger une cuvette de réaction dans et hors de chaque cavité d'incubation via l'ouverture d'introduction inférieure respective. La présence d'une pluralité de cavités d'incubation permet notamment de réguler des cuvettes de réaction reçues dans le dispositif d'incubation à différentes valeurs de température.

Selon un mode de réalisation de l'invention, le dispositif d'incubation comprend une pluralité d'orifices de passage supérieurs débouchant chacun dans une cavité d'incubation respective, chaque orifice de passage supérieur étant destiné au passage d'une aiguille de prélèvement apte à alimenter chaque cuvette de réaction reçue dans le dispositif d'incubation en échantillons de liquide biologique à analyser et/ou en produits réactifs.

Selon un mode de réalisation de l'invention, le dispositif d'incubation comprend un élément d'immobilisation monté mobile entre une position d'introduction dans laquelle des cuvettes de réaction peuvent être chargées et déchargées hors des cavités d'incubation, et une position d'immobilisation dans laquelle l'élément d'immobilisation empêche un retrait des cuvettes de réaction hors des cavités d'incubation respectives. Ces dispositions permettent notamment d'éviter un retrait d'une cuvette de réaction hors du dispositif d'incubation lors de la perforation de la portion d'obturation respective par une aiguille de prélèvement destinée à alimenter la cuvette de réaction en échantillon de liquide biologique et/ou en produits réactifs.

Selon un mode de réalisation de l'invention, l'élément d'immobilisation est configuré pour libérer les ouvertures d'introduction des cavités d'incubation lorsqu'il est dans la position d'introduction, et pour s'étendre au moins en partie en regard des ouvertures d'introduction des cavités d'incubation lorsqu'il est dans la position d'immobilisation.

Selon un mode de réalisation de l'invention, chaque cavité d'incubation est configurée pour loger intégralement une cuvette de réaction.

Selon un mode de réalisation de l'invention, chaque cavité d'incubation présente une forme sensiblement complémentaire des cuvettes de réaction. Ces dispositions assurent une importante surface d'échange thermique entre une cuvette de réaction reçue dans une cavité d'incubation et le dispositif d'incubation, et donc une meilleure régulation de la température des liquides contenus dans ladite cuvette de réaction.

Selon un mode de réalisation de l'invention, l'élément d'immobilisation comporte une pluralité d'ouvertures de passage, chaque ouverture de passage étant configurée pour s'étendre en regard de l'ouverture d'introduction d'une cavité d'incubation respective lorsque l'élément d'immobilisation est dans la position d'introduction, et pour être décalée latéralement par rapport à l'ouverture d'introduction de la cavité d'incubation respective lorsque l'élément d'immobilisation est dans la position d'immobilisation.

Selon un mode de réalisation de l'invention, les cavités d'incubation du dispositif d'incubation sont disposées selon une matrice de rangées et de colonnes.

Selon un mode de réalisation de l'invention, le dispositif d'incubation est configuré pour maintenir la température de chaque cuvette de réaction reçue dans une cavité d'incubation dans une plage de températures prédéterminée. Avantageusement, le dispositif d'incubation est thermostaté.

Avantageusement, chaque cavité d'incubation débouche dans une face inférieure du dispositif d'incubation.

Selon un mode de réalisation de l'invention, au moins un poste de traitement d'échantillons comprend une pluralité d'orifices de passage supérieurs débouchant chacun dans une cavité de réception respective et destinés chacun au passage d'une aiguille de prélèvement.

Selon un mode de réalisation de l'invention, le système d'analyse automatique comprend au moins un dispositif de prélèvement agencé pour prélever des échantillons de liquide biologique à analyser et/ou des produits réactifs dans des récipients chargés dans le système d'analyse automatique, et pour alimenter les cuvettes de réaction en échantillons de liquide biologique et/ou en produits réactifs, et par exemple pour alimenter en échantillons de liquide biologique et/ou en produits réactifs les cuvettes de réaction reçues dans le dispositif d'incubation et/ou dans l'au moins un poste de traitement d'échantillons.

Selon un mode de réalisation de l'invention, l'au moins un poste de traitement d'échantillons comporte au moins un dispositif parmi un dispositif de lecture photométrique, un dispositif de lecture par fluorescence, un dispositif de lecture par luminescence, un dispositif de mesure cytométrique et un dispositif de mesure de coagulation. L'au moins un poste de traitement d'échantillons pourrait par exemple comporter plusieurs dispositifs de mesure de coagulation.

Selon un mode de réalisation de l'invention, l'au moins un poste de traitement d'échantillons comporte un poste de lecture photométrique comprenant un dispositif de lecture photométrique et un incubateur comportant une pluralité de cavités de réception configurées chacune pour recevoir et loger au moins en partie une cuvette de réaction, le dispositif de lecture photométrique étant apte à effectuer une lecture photométrique des cuvettes de réaction reçues dans les cavités de réception de l'incubateur.

Selon un mode de réalisation de l'invention, l'incubateur comprend :
- un rotor d'incubation d'axe de rotation sensiblement vertical et comportant la pluralité de cavités de réception respectives,
- une partie de support fixe disposée sous le rotor d'incubation, la partie de support fixe délimitant un chemin de déplacement dans lequel des cuvettes de réaction, reçues dans les cavités de réception prévues sur le rotor d'incubation, sont aptes à se déplacer sous l'action du rotor d'incubation, le chemin de déplacement étant annulaire et ouvert vers le haut.

Selon un mode de réalisation de l'invention, le chemin de déplacement est régulé en température.

Selon un mode de réalisation de l'invention, la partie de support fixe comporte une ouverture de chargement inférieure débouchant dans le chemin de déplacement et à travers laquelle une cuvette de réaction est apte à être chargée dans l'incubateur par le dispositif de déplacement.

Selon un mode de réalisation de l'invention, la partie de support fixe comporte une ouverture de déchargement inférieure débouchant dans le chemin de déplacement et à travers laquelle une cuvette de réaction est apte à être déchargée hors de l'incubateur.

Selon un mode de réalisation de l'invention, l'incubateur comprend des moyens d'entraînement en rotation associés au rotor d'incubation et agencés pour entraîner en rotation le rotor d'incubation autour de son axe de rotation.

Selon un mode de réalisation de l'invention, le dispositif de lecture photométrique comprend un photomètre agencé pour effectuer une lecture photométrique des cuvettes de réaction reçues dans le chemin de déplacement.

Selon un autre mode de réalisation de l'invention, l'incubateur est fixe et le dispositif de lecture photométrique est monté mobile par rapport à l'incubateur et est agencé pour effectuer une lecture photométrique des cuvettes de réaction reçues dans les cavités de réception de l'incubateur. Selon un tel mode de réalisation de l'invention, les cavités de réception de l'incubateur sont alignées.

Selon un mode de réalisation de l'invention, l'au moins un poste de traitement d'échantillons comporte un poste de lavage et de sédimentation magnétique comprenant au moins une cavité de réception configurée pour recevoir et loger au moins en partie une cuvette de réaction, l'au moins une cavité de réception de l'au moins un poste de lavage et de sédimentation magnétique comprenant une ouverture d'introduction inférieure débouchant vers le bas et configurée pour permettre l'introduction d'une cuvette de réaction dans ladite au moins une cavité de réception, le dispositif de déplacement étant configuré pour charger et décharger une cuvette de réaction dans et hors de ladite au moins une cavité de réception via l'ouverture d'introduction respective.

Selon un mode de réalisation de l'invention, le poste de lavage et de sédimentation magnétique comprend au moins un appareil de pipetage configuré pour retirer des liquides contenus dans une cuvette de réaction reçue dans l'au moins une cavité de réception de l'au moins un poste de lavage et de sédimentation magnétique, et pour introduire une solution de lavage dans ladite cuvette de réaction.

Selon un mode de réalisation de l'invention, le poste de lavage et de sédimentation magnétique comprend au moins un générateur de champ magnétique, tel qu'un aimant permanent ou un électroaimant.

Selon un mode de réalisation de l'invention, chaque cuvette de réaction présente au moins un plan de symétrie, et peut par exemple présenter deux plans de symétrie orthogonaux.

Selon un mode de réalisation de l'invention, les postes de traitement d'échantillons sont disposés autour du dispositif d'incubation.

Selon un mode de réalisation de l'invention, l'au moins un poste de traitement d'échantillons comporte un poste d'amplification et de mesure pour biologie moléculaire, tel qu'un poste d'amplification PCR et de mesure. Le poste d'amplification PCR et de mesure peut par exemple comprendre un dispositif de lecture par fluorescence ou par luminescence.

Selon un mode de réalisation de l'invention, l'au moins un poste de traitement d'échantillons comporte un poste d'élution.

De toute façon l'invention sera bien comprise à l'aide de la description qui suit en référence au dessin schématique annexé représentant, à titre d'exemples non limitatif, deux formes d'exécution de ce système d'analyse automatique.
Figure 1 est une vue en perspective d'un système d'analyse automatique selon un premier mode de réalisation de l'invention.
Figures 2 et 3 sont des vues partielles en perspective d'une plaque de cuvettes de réaction avec et sans film d'obturation.
Figure 4 est une vue en coupe, en perspective, d'une cuvette de réaction.
Figure 5 est une vue en perspective d'une cuvette de réaction.
Figure 6 est une vue en perspective d'un dispositif de déplacement appartenant au système d'analyse automatique de la figure 1.
Figures 7 et 8 sont des vues partielles en perspective du dispositif de déplacement de la figure 6 et d'un dispositif de stockage.
Figures 9 est une vue en perspective de dessous du dispositif de déplacement, d'un dispositif d'incubation et de différents postes de traitement appartenant au système d'analyse automatique de la figure 1.
Figures 10 et 11 sont des vues en coupe, en perspective, du dispositif d'incubation dans deux positions de fonctionnement différentes.
Figure 12 est une vue partielle en perspective de dessous du dispositif d'incubation.
Figures 13 et 14 sont des vues en perspective de dessus et de dessous d'un poste de lecture photométrique appartenant au système d'analyse automatique de la figure 1.
Figure 15 est une vue en coupe, en perspective, du poste de lecture photométrique.
Figure 16 est une vue en perspective d'un poste de lavage et de sédimentation magnétique appartenant au système d'analyse automatique de la figure 1.
Figure 17 est une vue en perspective d'un système d'analyse automatique selon un deuxième mode de réalisation de l'invention.

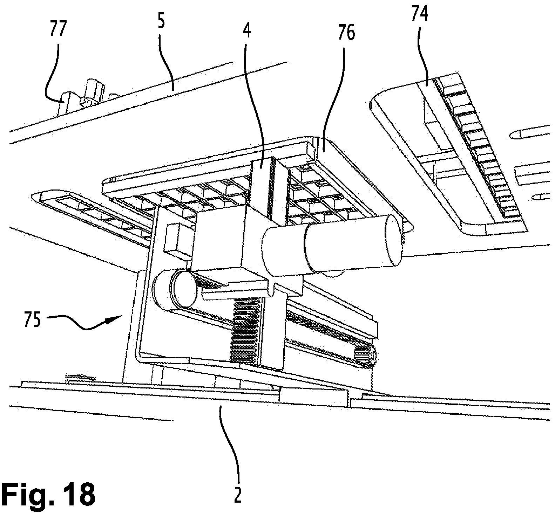

Figures 18 est une vue en perspective de dessous d'un dispositif de déplacement, d'un dispositif d'incubation et de différents postes de traitement appartenant au système d'analyse automatique de la figure 17.

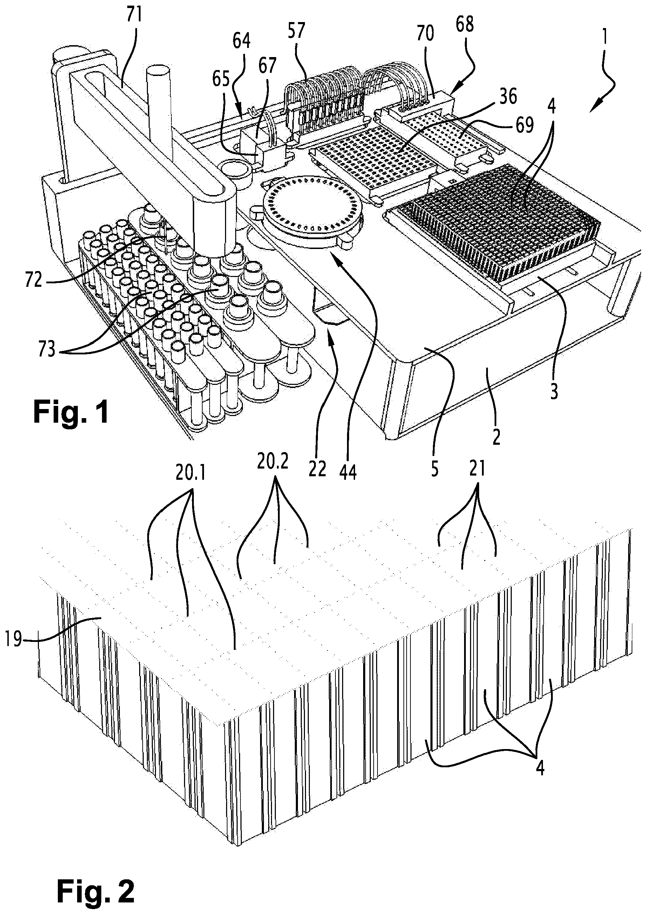

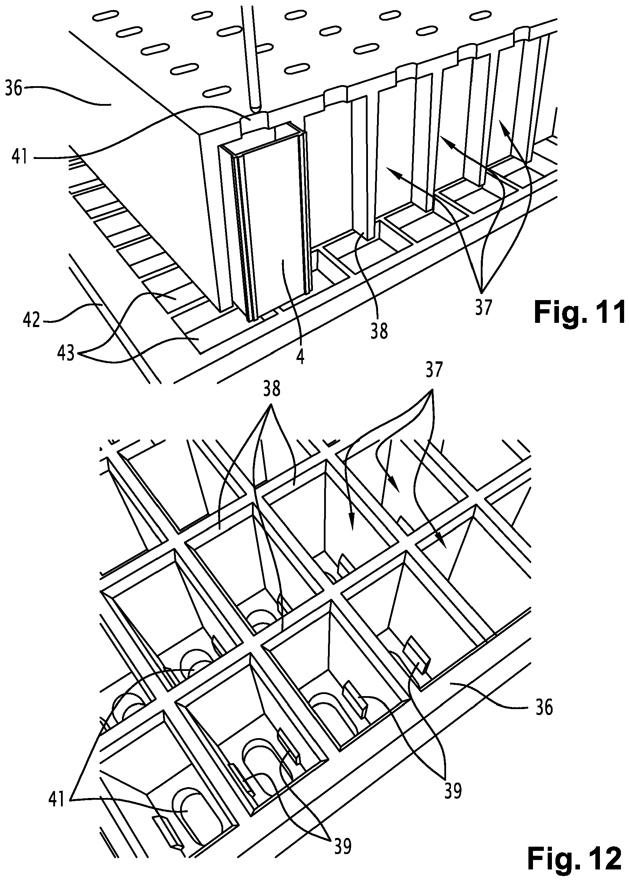

Les figures 1 à 16 représentent un système d'analyse automatique 2 pour diagnostic in vitro selon un premier mode de réalisation de la présente invention.

Le système d'analyse automatique 1 comprend une structure de support 2, une interface de communication et de visualisation (non représentée sur les figures) montée sur la structure de support 2, et une électronique embarquée (non représentée sur les figures) montée également sur la structure de support 2.

L'interface de communication et de visualisation comporte par exemple un écran tactile relié à un ordinateur de type PC. L'ordinateur de type PC est plus particulièrement agencé pour enregistrer des demandes d'analyses chargées manuellement par un opérateur à l'aide de l'écran tactile ou en provenance d'une unité centrale d'un laboratoire d'analyse, pour envoyer des requêtes d'analyse à l'électronique embarquée, pour récupérer des données mesurées, les traiter grâce à des algorithmes spécifiques, et mettre les résultats à disposition de l'opérateur.

Le système d'analyse automatique 1 comprend en outre un dispositif de stockage 3 configuré pour stocker une pluralité de cuvettes de réaction 4. Le dispositif de stockage 3 est avantageusement monté sur un plateau de support 5 décalé verticalement par rapport à la structure de support 2. Comme montré sur les figures 1, 7 et 8, les cuvettes de réaction 4 sont avantageusement juxtaposées et disposées en matrice dans le dispositif de stockage 3. Chaque cuvette de réaction 4 est avantageusement réalisée en matière plastique transparente aux faisceaux lumineux.

Comme montré plus particulièrement sur les figures 2 à 5, chaque cuvette de réaction 4 présente une forme générale parallélépipédique, et comprend une embase 6 et une partie supérieure 7 délimitant une cavité réactionnelle 8 qui est ouverte vers le haut et est destinée à contenir un échantillon de liquide biologique à analyser, tel qu'un échantillon sanguin. Le bord supérieur 9 de la partie supérieure 7 de chaque cuvette de réaction 4 délimite plus particulièrement une ouverture de cuvette 10 débouchant dans la cavité réactionnelle 8 respective.

La cavité réactionnelle 8 comprend avantageusement un fond 11 présentant un point bas 12, par exemple centré par rapport à la cavité réactionnelle 8, de telle sorte qu'il est possible d'aspirer aisément la quasi-totalité du liquide réactionnel présent dans la cavité réactionnelle 8, avec un volume restant dans la cuvette de réaction 4 très réduit. Le fond 11 peut par exemple présenter une forme sensiblement conique.

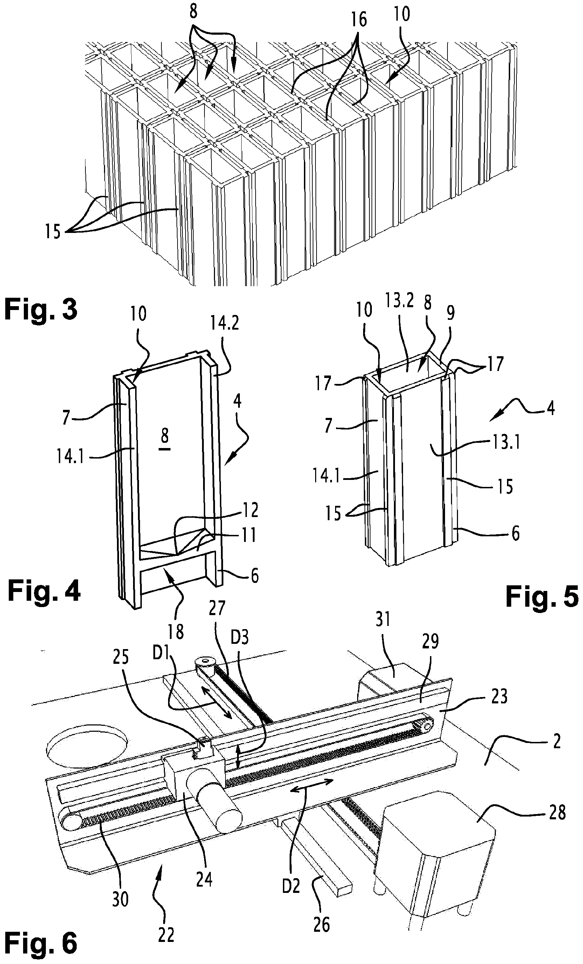

Chaque cuvette de réaction 4 comprend en outre deux parois longitudinales 13.1, 13.2 parallèles entre elles, et deux parois transversales 14.1, 14.2 également parallèles entre elles. Les parois longitudinales 13.1, 13.2 et les parois transversales 14.1, 14.2 de chaque cuvette de réaction 4 sont avantageusement chacune pourvues d'une ou de plusieurs nervures de positionnement 15. Selon le mode de réalisation représenté sur les figures, chacune des parois longitudinales et transversales est pourvue de deux nervures de positionnement 15 parallèles. Chaque nervure de positionnement 15 d'une cuvette de réaction 4 est avantageusement configurée pour coopérer avec une nervure de positionnement 15 d'une cuvette de réaction 4 adjacente, de manière à ménager un espace 16 entre les ouvertures de cuvette 10 de deux cuvettes de réaction 4 adjacentes (voir la figure 3). Chaque nervure de positionnement 15 s'étend avantageusement sur toute ou sensiblement toute la hauteur de la cuvette de réaction respective, et peut présenter, comme cela est monté sur la figure 5, un chanfrein supérieur 17.

Comme montré sur la figure 4, l'embase 6 de chaque cuvette de réaction 4 comprend un logement de réception 18, également nommé logement de préhension, débouchant vers le bas et dont la fonction sera explicitée ci-après.

Comme montré plus particulièrement sur la figure 2, les cuvettes de réaction 4 peuvent avantageusement être reliées entre elles par un film d'obturation flexible 19 obturant les ouvertures de cuvette 10 des cuvettes de réaction 4, de manière à former une plaque de cuvettes de réaction. Avantageusement, le film d'obturation flexible 19 est en matière synthétique, et est fixé sur les bords supérieurs 9 des cuvettes de réaction 4 par exemple être réalisée par thermo-soudage.

Selon le mode de réalisation représenté sur les figures, le film d'obturation flexible 19 comprend une pluralité de lignes de prédécoupe 20.1, 20.2 délimitant une pluralité de portions d'obturation 21 obturant chacune l'ouverture de cuvette 10 d'une cuvette de réaction 4 respective. Le film d'obturation flexible 19 comprend avantageusement une première série de lignes de prédécoupe 20.1 s'étendant entre des rangées de cuvettes de réaction 4, et une deuxième série de lignes de prédécoupe 20.2 s'étendant entre des colonnes de cuvettes de réaction 4. Les lignes de prédécoupe 20.1 de la première série s'étendent avantageusement orthogonalement aux lignes de prédécoupe 20.2 de la deuxième série.

Le système d'analyse automatique 1 comprend également un dispositif de déplacement 22, montré plus particulièrement sur les figures 6 à 9, disposé sous le plateau de support 5. Le dispositif de déplacement 22 est configuré pour déplacer une cuvette de réaction 4 selon des déplacements cartésiens, et en particulier pour manipuler cette dernière par le dessous.

Le dispositif de déplacement 22 comprend un premier élément de support 23 monté mobile par rapport à la structure de support 2 selon une première direction de déplacement D1 horizontale, un deuxième élément de support 24 monté mobile sur le premier élément de support 23 selon une deuxième direction de déplacement D2 horizontale et orthogonale à la première direction de déplacement D1, et un organe d'entraînement 25, par exemple sous la forme d'un doigt d'entraînement, monté mobile sur le deuxième élément de support 24 selon une troisième direction de déplacement D3 qui est verticale et donc orthogonale aux première et deuxième directions de déplacement D1, D2. L'organe d'entraînement 25 est agencé pour être introduit dans le logement de réception 18 d'une cuvette de réaction 4, et pour transmettre un mouvement d'entraînement à ladite cuvette de réaction 4.

Avantageusement, le dispositif de déplacement 22 comprend des premiers moyens d'entraînement en translation configurés pour entraîner en translation le premier élément de support 23 selon la première direction de déplacement D1, des deuxièmes moyens d'entraînement en translation configurés pour entraîner en translation le deuxième élément de support 24 selon la deuxième direction de déplacement D2, et des troisièmes moyens d'entraînement en translation configurés pour entraîner en translation l'organe d'entraînement 25 selon la troisième direction de déplacement D3.

Les premiers moyens d'entraînement en translation peuvent comprendre par exemple :
- un rail de guidage 26 monté sur la structure de support 2 et s'étendant horizontalement selon la première direction de déplacement D1, le premier élément de support 23 étant monté coulissant sur le rail de guidage 26,
- une courroie sans fin 27, de préférence crantée, reliée au premier élément de support 23 et agencée pour entraîner en coulissement ce dernier le long du rail de guidage 26, et
- un moteur d'entraînement 28 dont l'arbre de sortie est pourvu d'un pignon, de préférence cranté, agencé pour entraîner la courroie sans fin 27.

Les deuxièmes moyens d'entraînement en translation peuvent comprendre par exemple :
- un rail de guidage 29 monté sur le premier élément de support 23 et s'étendant horizontalement selon la deuxième direction de déplacement D2, le deuxième élément de support 24 étant monté coulissant sur le rail de guidage 29,
- une courroie sans fin 30, de préférence crantée, reliée au deuxième élément de support 24 et agencée pour entraîner en coulissement ce dernier le long du rail de guidage 29, et
- un moteur d'entraînement 31 dont l'arbre de sortie est pourvu d'un pignon, de préférence cranté, agencé pour entraîner la courroie sans fin 30.

Les troisièmes moyens d'entraînement en translation peuvent comprendre par exemple un moteur d'entraînement dont l'arbre de sortie est pourvu d'un pignon, de préférence cranté, agencé pour coopérer avec une crémaillère prévue sur l'organe d'entrainement 25.

Le dispositif de déplacement 22 comprend en outre avantageusement des moyens d'aspiration configurés pour retenir une cuvette de réaction 4 sur l'organe d'entraînement 25 lors des déplacements de la cuvette de réaction. Les moyens d'aspiration sont avantageusement configurés pour générer une dépression à l'extrémité de l'organe d'entraînement 25. Les moyens d'aspiration comportent par exemple un orifice d'aspiration 32 prévu sur l'extrémité de l'organe d'entraînement 25, et relié à une source de dépression (non représentée sur les figures). Lors d'un déplacement d'une cuvette de réaction 4 par le dispositif de déplacement 22, l'orifice d'aspiration 32 est configuré pour être situé en regard du fond du logement de réception 18 de ladite cuvette de réaction 4.

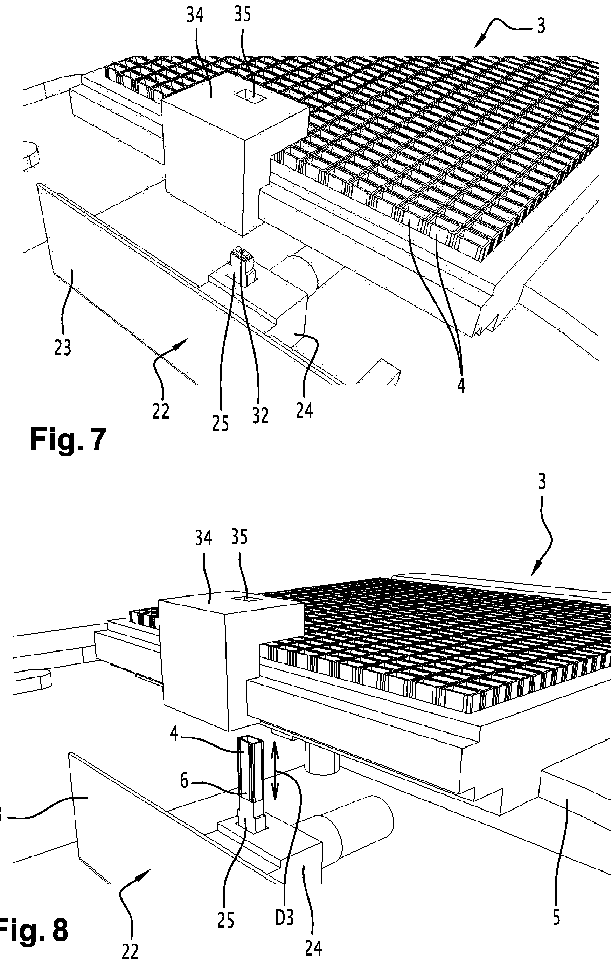

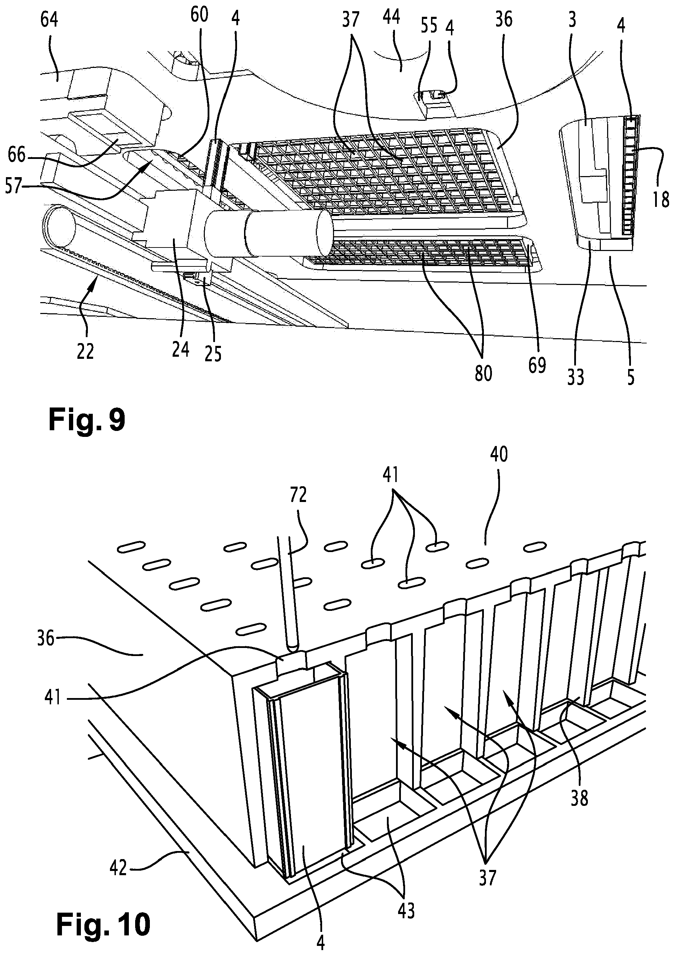

Comme montré plus particulièrement sur les figures 7 et 8, l'organe d'entraînement 25 est apte à être déplacé au moins en partie sous le dispositif de stockage 3, et le dispositif de déplacement 22 est adapté pour décharger une cuvette de réaction 4 reçue dans le dispositif de stockage 3 hors de ce dernier. A cet effet, le plateau de support 5 comporte une lumière de passage 33, visible sur la figure 9, s'étendant le long d'un bord latéral du dispositif de stockage 3, et plus particulièrement le long d'une rangée d'extrémité de cuvettes de réaction 4 reçues dans le dispositif de stockage 3. La lumière de passage 33 est conformée pour permettre le passage de l'organe d'entraînement 25 et d'une cuvette de réaction 4.

Pour décharger une cuvette de réaction 4 hors du dispositif de stockage 3, le dispositif de déplacement 22 est commandé de manière à :
- déplacer horizontalement l'organe d'entraînement 25 en dessous de la cuvette de réaction à décharger,
- déplacer verticalement vers le haut l'organe d'entraînement 25 de telle sorte que l'organe d'entraînement 25 s'insert dans le logement de réaction 18 de la cuvette de réaction à décharger et soulève cette dernière de manière à rompre les lignes de prédécoupe 20.1, 20.2 délimitant la portion d'obturation 21 respective,
- activer la source de dépression de telle sorte que la cuvette de réaction 4 soulevée par l'organe d'entraînement 25 soit retenue fermement par ce dernier, la force de retenue générée par les moyens d'aspiration pouvant être détectée à l'aide d'un détecteur approprié, tel qu'un capteur de pression, et
- déplacer verticalement vers le bas l'organe d'entraînement 25 de telle sorte que la cuvette de réaction 4 soit extraite hors du dispositif de stockage 3.

Avantageusement, afin de faciliter la rupture des lignes de prédécoupe respectives lors du soulèvement d'une cuvette de réaction à décharger, le dispositif de stockage 3 comprend un organe de butée 34 comprenant un trou de passage 35 destiné à être disposé verticalement au dessus de la cuvette de réaction soulevée. Le dispositif de stockage 3 est ainsi configuré de telle sorte que, lors du soulèvement d'une cuvette de réaction 4 par le dispositif de déplacement 22, l'organe de butée 34 maintient en position les cuvettes de réaction 4 entourant à la cuvette de réaction soulevée et le trou de passage 35 autorise le passage d'au moins une partie de la cuvette de réaction soulevée. La présence du chanfrein supérieur 17 sur chaque nervure de positionnement 15 facilite également la rupture des lignes de prédécoupe lors du soulèvement d'une cuvette de réaction 4.

Le système d'analyse automatique 1 comprend en outre un dispositif d'incubation 36 monté sur le plateau de support 5. Comme montré plus particulièrement sur les figures 10 à 12, le dispositif d'incubation 36 comprend une pièce métallique comportant une pluralité de cavités d'incubation 37 disposées selon une matrice de rangées et de colonnes, et débouchant dans une face inférieure du dispositif d'incubation 36. Chaque cavité d'incubation 37 est configurée pour recevoir et loger au moins en partie une cuvette de réaction 4. Chaque cavité d'incubation 37 comprend une ouverture d'introduction inférieure 38 débouchant vers le bas et configurée pour permettre l'introduction d'une cuvette de réaction 4 dans la cavité d'incubation respective. Chaque cavité d'incubation 37 présente avantageusement une forme sensiblement complémentaire de celle des cuvettes de réaction 4.

Selon le mode de réalisation représenté sur les figures, chaque cavité d'incubation 37 comprend deux éléments de retenue 39, tels que des bossages de retenue ou des saillies de retenue, configurés pour coopérer avec les parois longitudinales d'une cuvette de réaction 4 de manière à retenir la cuvette de réaction 4 dans la cavité d'incubation 37 respective. Avantageusement, chaque cavité d'incubation 37 est configurée pour loger intégralement une cuvette de réaction 4.

Le dispositif d'incubation 36 comprend une partie d'obturation supérieure 40 sensiblement plane et obturant partiellement les portions supérieures des cavités d'incubation 37. La partie d'obturation supérieure 40 est avantageusement pourvue d'orifices de passage supérieurs 41 débouchant chacun dans une cavité d'incubation 37 respective, et destinés chacun au passage d'une aiguille de prélèvement apte à percer les portions d'obturation 21 des cuvettes de réaction 4 reçues dans le dispositif d'incubation 36 et à alimenter chaque cuvette de réaction 4 reçue dans le dispositif d'incubation 36 en échantillons de liquide biologique à analyser et/ou en produits réactifs. Chaque orifice de passage 41 est plus particulièrement disposé à l'opposé de l'ouverture d'introduction 38 de la cavité d'incubation 37 respective.

Le dispositif d'incubation 36 comprend en outre un élément d'immobilisation 42, par exemple réalisé sous la forme d'une plaque d'immobilisation, comportant une pluralité d'ouvertures de passage 43. L'élément d'immobilisation 42 est monté coulissant entre une position d'introduction dans laquelle chaque ouverture de passage 43 s'étend en regard d'une ouverture d'introduction 38 respective et des cuvettes de réaction 4 peuvent être introduites dans les cavités d'incubation 37, et une position d'immobilisation dans laquelle chaque ouverture de passage 43 est décalée latéralement par rapport à l'ouverture d'introduction 38 respective de manière à empêcher un retrait des cuvettes de réaction 4 hors des cavités d'incubation 37 respectives.

Le dispositif d'incubation 36 est avantageusement thermostaté, et est plus particulièrement configuré pour maintenir la température de chaque cuvette de réaction 4 reçue dans une cavité d'incubation 37 dans une plage de températures prédéterminée. Le dispositif d'incubation 36 peut par exemple comprendre un ou plusieurs éléments de chauffage (non représentés sur les figures) configurés pour chauffer les cavités d'incubation 37. Chaque élément de chauffage peut être associé à une ou plusieurs cavités d'incubation 37. Ces dispositions permettent de définir, si cela est souhaité, différentes températures d'incubation dans différentes zones du dispositif d'incubation 36.

Il convient d'être noté que le dispositif de déplacement 22 est configuré pour charger et décharger une cuvette de réaction 4 dans et hors de chaque cavité d'incubation 37 via l'ouverture d'introduction 38 respective, et pour déplacer une cuvette de réaction 4 entre le dispositif de stockage 3 et le dispositif d'incubation 36. A cet effet, le plateau de support 5 présente également une lumière de passage à travers laquelle s'étend en partie le dispositif d'incubation 36.

Le système d'analyse automatique 1 comprend également un ou plusieurs postes de traitement d'échantillons disposés sur le plateau de support 5, tels que des postes d'analyse et/ou de mesure pour diagnostic in vitro. L'un de ces postes de traitement d'échantillons est avantageusement un poste de lecture photométrique 44, qui peut par exemple comprendre un dispositif de lecture photométrique 45 et un incubateur 46.

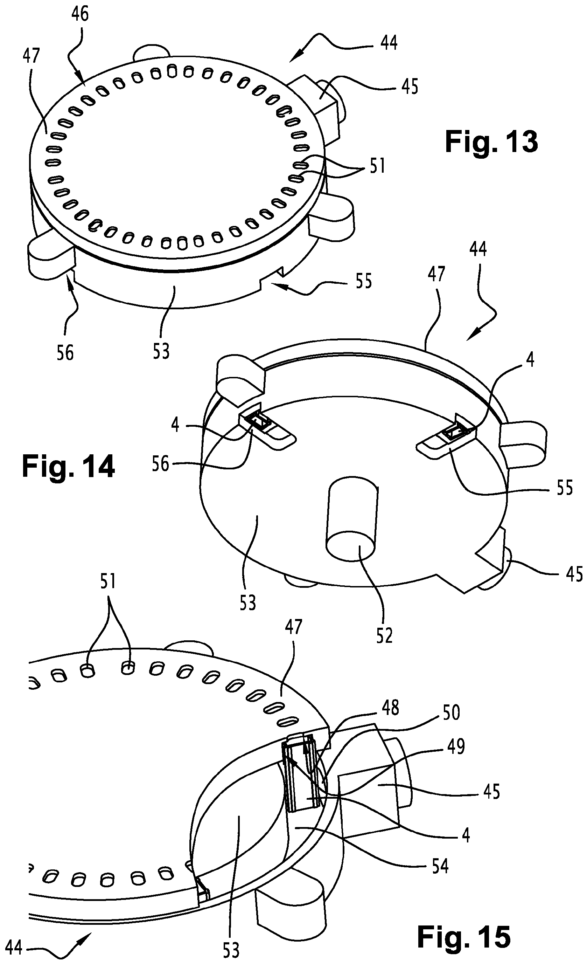

Selon le mode de réalisation représenté sur les figures, l'incubateur 46 comprend (voir les figures 13 à 15) un rotor d'incubation 47 d'axe de rotation sensiblement vertical et comportant une pluralité de cavités de réception 48 décalées angulairement les unes des autres. Chaque cavité de réception 48 est configurée pour recevoir et loger en partie une cuvette de réaction 4, et débouche dans une face inférieure du rotor d'incubation 47. Chaque cavité de réception 48 comprend une ouverture d'introduction inférieure 49 débouchant vers le bas, et configurée pour permettre l'introduction d'une cuvette de réaction 4 dans la cavité de réception 48 respective.

Le rotor d'incubation 47 comprend de plus une pluralité d'orifices de passage supérieurs 51 débouchant chacun dans une cavité de réception 48 respective, et destinés chacun au passage d'une aiguille de prélèvement apte à alimenter chaque cuvette de réaction 4 reçue dans l'incubateur 46 en échantillons de liquide biologique à analyser et/ou en produits réactifs. Chaque orifice de passage 51 est plus particulièrement disposé à l'opposé de l'ouverture d'introduction 49 de la cavité de réception 48 respective.

L'incubateur 46 comprend également des moyens d'entraînement en rotation associés au rotor d'incubation 47, et agencés pour entraîner en rotation le rotor d'incubation 47 autour de son axe de rotation. Les moyens d'entraînement en rotation peuvent par exemple comprend un moteur d'entraînement 52.

L'incubateur 46 comprend en outre une partie de support fixe 53 disposée sous le rotor d'incubation 47. La partie de support fixe 53 délimite un chemin de déplacement 54 dans lequel des cuvettes de réaction 4, reçues dans les cavités de réception 48 prévues sur le rotor d'incubation 47, sont aptes à se déplacer sous l'action du rotor d'incubation 48. Le chemin de déplacement 54 est avantageusement annulaire et ouvert vers le haut. Le chemin de déplacement 54 est régulé en température, par exemple par l'intermédiaire de moyens connus de l'homme du métier, tels qu'un élément de chauffage, un capteur de température et un asservissement. L'élément de chauffage peut par exemple être une résistance électrique.

La partie de support fixe 53 comporte en outre une ouverture de chargement inférieure 55 débouchant dans le chemin de déplacement 54 et à travers laquelle une cuvette de réaction 4 est apte à être chargée dans l'incubateur 46, et une ouverture de déchargement inférieure 56 débouchant dans le chemin de déplacement 54 et à travers laquelle une cuvette de réaction 4 est apte à être déchargée hors de l'incubateur 46. Avantageusement, l'ouverture de déchargement inférieure 56 est disposée au dessus d'un réceptacle à déchets (non représenté sur les figures).

Le dispositif de lecture photométrique 45 comprend avantageusement un photomètre 50 agencé pour effectuer une lecture photométrique des cuvettes de réaction 4 reçues dans le chemin de déplacement 54, et plus particulièrement pour mesurer l'absorbance de la solution réactionnelle qui se trouve dans chaque cuvette de réaction 4 reçue dans le chemin de déplacement 54.

Il convient d'être noté que le dispositif de déplacement 22 est configuré pour charger et décharger une cuvette de réaction 4 dans et hors de chaque cavité de réception 48 via l'ouverture d'introduction 49 respective, et pour déplacer une cuvette de réaction 4 en direction du poste de lecture photométrique 44. A cet effet, le plateau de support 5 présente également une lumière de passage à travers laquelle s'étend en partie l'incubateur 46.

Selon une variante de réalisation de l'invention non représentée sur les figures, l'incubateur 46 pourrait être fixe et comprendre des cavités de réception 48 alignées, et le dispositif de lecture photométrique 45 pourrait être monté mobile par rapport à l'incubateur 46 pour effectuer une lecture photométrique des cuvettes de réaction 4 reçues dans les cavités de réception d'un tel incubateur.

Le système d'analyse automatique 1 comprend en outre un poste de lavage et de sédimentation magnétique 57 monté sur le plateau de support 5. Comme montré sur la figure 57, le poste de lavage et de sédimentation magnétique 57 comprend une partie de sédimentation 58 comprenant avantageusement une pluralité de cavités de réception 59 alignées les unes par rapport aux autres. Chaque cavité de réception 59 est configurée pour recevoir et loger en partie une cuvette de réaction 4, et débouche dans une face inférieure de la partie de sédimentation 58. Chaque cavité de réception 59 comprend une ouverture d'introduction inférieure 60 débouchant vers le bas, et configurée pour permettre l'introduction d'une cuvette de réaction 4 dans la cavité de réception 59 respective.

Il convient d'être noté que le dispositif de déplacement 22 est configuré pour charger et décharger une cuvette de réaction 4 dans et hors de chaque cavité de réception 59 via l'ouverture d'introduction respective, et pour déplacer une cuvette de réaction 4 en direction du poste de lavage et de sédimentation magnétique 57, et par exemple pour déplacer une cuvette de réaction 4 du dispositif d'incubation 36 au poste de lavage et de sédimentation magnétique 57.

La partie de sédimentation 58 comprend en outre une pluralité de générateurs de champ magnétique 61 associés chacun à l'une des cavités de réception 59. Chaque générateur de champ magnétique 61 est configuré pour générer un champ magnétique, et peut être formé par exemple par un aimant permanent ou un électroaimant.

Le poste de lavage et de sédimentation magnétique 57 comprend en outre une partie de lavage 62 comprenant une pluralité d'appareils de pipetage 63 associés chacun à l'une des cavités de réception 59. Chaque appareil de pipetage 63 est configuré pour retirer des liquides contenus dans une cuvette de réaction 4 reçue dans la cavité de réception 59 respective, et pour introduire une solution de lavage dans ladite cuvette de réaction.

Ainsi, lorsqu'une cuvette de réaction 4, contenant des particules magnétiques revêtues de partenaires de liaison d'analyte, est reçue dans l'une des cavité de réception 59 du poste de lavage et de sédimentation magnétique 57, le générateur de champ magnétique 61 associé attire les particules magnétiques contenues dans ladite cuvette de réaction 4 contre l'une des parois longitudinales de cette dernière, et le contenu de la cuvette de réaction 4, à l'exception des particules magnétiques et de l'analyte lié aux particules magnétiques, est aspiré par l'appareil de pipetage 63 associé. Ensuite, une solution de lavage est introduite dans la cuvette de réaction 4 par l'appareil de pipetage 63 associé, afin de laver les particules magnétiques. Après une durée prédéterminée, la solution de lavage est aspirée par l'appareil de pipetage 63. Dès que la cuvette de réaction 4 a été traitée, elle peut être réintroduite dans le dispositif d'incubation 36 au moyen du dispositif de déplacement 22, ou être introduite dans un poste d'analyse et/ou de mesure pourvu d'une cavité de réception également au moyen du dispositif de déplacement 22.

Avantageusement, le système d'analyse automatique 1 comprend en outre un poste de lecture par luminescence 64 monté sur le plateau de support 5 (voir la figure 1). Le poste de lecture par luminescence 64 comprend une partie de réception 65 comprenant une cavité de réception 66 similaire aux cavités de réception 48, 59, et agencée également pour recevoir et loger au moins en partie une cuvette de réaction 4. Le poste de lecture par luminescence 64 comprend en outre un luminomètre 67 configuré pour mesurer la lumière émise par une solution contenue dans une cuvette de réaction 4 reçue dans la partie de réception 65, la lumière étant produite par des réactifs déclenchants distribués directement dans la cuvette de réaction 4 reçue dans la partie de réception 65, ou distribués préalablement dans la cuvette de réaction 4 dans un poste de traitement approprié.

Le dispositif de déplacement 22 est également configuré pour charger et décharger une cuvette de réaction 4 dans et hors de la cavité de réception prévue dans le poste de lecture par luminescence 64, et pour déplacer une cuvette de réaction 4 en direction du poste de lecture par luminescence 64, et par exemple pour déplacer une cuvette de réaction 4 du poste de lavage et de sédimentation magnétique 57 au poste de lecture par luminescence 64. Après lecture dans le poste de lecture par luminescence 64, la cuvette de réaction 4 peut être éjectée dans le réceptacle à déchet.

Le système d'analyse automatique 1 peut en outre comprendre un poste d'amplification PCR et de mesure 68 (voir la figure 1) monté sur le plateau de support 5. Le poste d'amplification PCR et de mesure 68 comprend avantageusement un incubateur 69 comportant une pluralité de cavités de réception 80 disposées en matrice et similaires aux cavités de réception 48, 59 et aux cavités d'incubation 37, chaque cavité de réception du poste d'amplification PCR et de mesure 68 étant agencée pour recevoir et loger au moins en partie une cuvette de réaction 4. Le poste d'amplification PCR et de mesure 68 comprend également un dispositif de lecture par fluorescence ou luminescence 70 qui est avantageusement multi-têtes et monté mobile en translation le long de l'incubateur 69. L'incubateur 69 peut être thermostaté à une température constante, ou être équipé d'un système de thermocyclage de manière à faire varier la température des cavités de réception respectives.

Le dispositif de déplacement 22 est également configuré pour charger et décharger une cuvette de réaction 4 dans et hors de chaque cavité de réception prévue dans le poste d'amplification PCR et de mesure 68, et pour déplacer une cuvette de réaction 4 en direction du poste d'amplification PCR et de mesure 68, et par exemple pour déplacer une cuvette de réaction 4 du poste de lavage et de sédimentation magnétique 57 au poste d'amplification PCR et de mesure 68.

Avantageusement, le dispositif de stockage 3, le poste de lecture photométrique 44, le poste de lecture par luminescence 64, le poste de lavage et de sédimentation magnétique 57 et le poste d'amplification PCR et de mesure 68 sont disposés autour du dispositif d'incubation 36.

Le système d'analyse automatique 1 comprend en outre un ou plusieurs dispositif(s) de prélèvement 71 équipé(s) chacune d'une aiguille de prélèvement 72, et agencé(s) pour prélever des échantillons de liquide biologique à analyser et/ou des produits réactifs dans des récipients 73 chargés dans le système d'analyse automatique 1, et pour alimenter les cuvettes de réaction 4 en échantillons de liquide biologique et/ou en produits réactifs, et par exemple pour alimenter en échantillons de liquide biologique et/ou en produits réactifs les cuvettes de réaction 4 reçues dans le dispositif d'incubation 36, l'incubateur 46 et l'incubateur 69.

Il convient d'être noté que le système d'analyse automatique 1 pourrait en outre comporter par exemple un poste de mesure cytométrique et/ou un ou plusieurs poste(s) de mesure de coagulation.

Le système d'analyse automatique 1 pourrait en outre comporter un ou plusieurs puits de lavage pour laver la ou les aiguilles de prélèvement 72. Cependant, chaque aiguille de prélèvement 72 pourrait être remplacée par des embouts jetables afin de se dispenser de l'utilisation de puits de lavage.

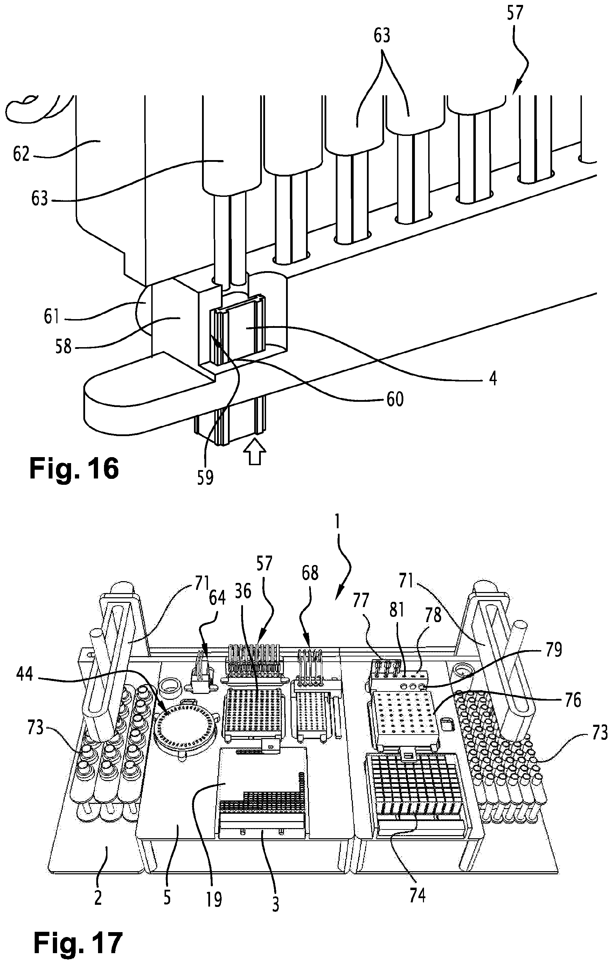

La figure 17 représenté un système d'analyse automatique 1 selon un deuxième mode de réalisation de l'invention qui diffère du premier mode de réalisation essentiellement en ce qu'il comporte un deuxième dispositif de stockage 74, un deuxième dispositif de déplacement 75, un deuxième dispositif d'incubation 76, un deuxième poste de lavage et de sédimentation magnétique 77 et enfin un poste d'élution 78. Il convient d'être noté que le dispositif de déplacement 75 est configuré pour décharger une cuvette de réaction 4 hors du dispositif de stockage 74, et pour charger et décharger une cuvette de réaction 4 dans et hors du dispositif d'incubation 76, dans et hors du poste de lavage et de sédimentation magnétique 77 et dans et hors du poste d'élution 78.

Le dispositif de stockage 74 diffère du dispositif de stockage 3 essentiellement en ce qu'il est configuré pour recevoir des cuvettes de réaction 4 de taille supérieure à celles pouvant être stockées dans le dispositif de stockage 3, et le dispositif d'incubation 76 et le deuxième poste de lavage et de sédimentation magnétique 77 diffèrent respectivement du dispositif d'incubation 36 et du poste de lavage et de sédimentation magnétique 57 essentiellement ce qu'ils comportent des cavités d'incubation et de réception de dimensions supérieures afin de pouvoir recevoir les cuvettes de réaction 4 stockées dans le dispositif de stockage 74. Il convient d'être noté d'une part que le deuxième dispositif de déplacement 75 diffère du dispositif de déplacement 22 uniquement en ce que l'organe d'entraînement associé présente des dimensions adaptées aux cuvettes de réaction 4 destinées à être stockées dans le dispositif de stockage 73, et d'autre part que les cuvettes de réaction destinées à être stockées dans le dispositif de stockage 73 présentent une structure identique ou sensiblement identique à celles destinées à être stockées dans le dispositif de stockage 3.

Par exemple, les cuvettes de réaction 4 destinées à être stockées dans le dispositif de stockage 3 présentent une cavité réactionnelle 8 d'un volume d'environ 200 µL, tandis que les cuvettes de réaction 4 destinées à être stockées dans le dispositif de stockage 73 présentent une cavité réactionnelle 8 d'un volume d'environ 2 mL. Une cuvette de réaction 4 stockée dans le dispositif de stockage 73 sera par exemple utilisée pour réaliser des prétraitements d'extraction ou des extractions sur des volumes de liquide significatifs, tandis qu'une cuvette de réaction 4 stockée dans le dispositif de stockage 3 pourra être utilisée dans les autres cas afin de limiter la quantité de produits réactifs utilisée. Il sera également possible de réaliser le prétraitement d'extraction dans une cuvette de réaction 4 provenant du dispositif de stockage 73, et ensuite la mesure correspondante dans une cuvette de réaction 4 provenant du dispositif de stockage 3.

Le poste d'élution 78 comprend une pluralité de cavités de réception alignées les unes par rapport aux autres et similaires aux cavités de réception du poste de lavage et de sédimentation magnétique 77. Le poste d'élution 78 comprend en outre une pluralité de générateurs de champ magnétique 79 associés chacun à une cavité de réception respective du poste d'élution 78. Chaque générateur de champ magnétique 79 est configuré pour générer un champ magnétique, et peut être formé par exemple par un aimant permanent ou un électroaimant.

Le poste d'élution 78 comprend en outre une pluralité d'orifices de passage supérieurs 81 débouchant chacun dans une cavité de réception respective du poste d'élution 78, et destinés chacun au passage d'une aiguille de prélèvement apte à alimenter chaque cuvette de réaction 4 reçue dans le poste d'élution 78 en solution d'élution, telle que l'aiguille de prélèvement 72 de l'un des dispositifs de prélèvement 71. Selon une variante de réalisation de l'invention, le poste d'élution 78 pourrait être pourvu d'une pluralité d'appareils de pipetage associés chacun à l'une des cavités de réception du poste d'élution 78, et configurés chacun pour introduire une solution d'élution dans une cuvette de réaction 4 reçue dans la cavité de réception respective.

Ainsi, lorsqu'une cuvette de réaction 4, contenant des particules magnétiques qui sont revêtues de partenaires de liaison d'analyte et qui ont été préalablement lavées dans le poste de lavage et de sédimentation magnétique 77, est reçue dans l'une des cavité de réception du poste d'élution 78, une solution d'élution est introduite dans la cuvette de réaction 4, par l'un des dispositifs de prélèvement 71 ou par l'appareil de pipetage associé, de manière à séparer l'analyte et les particules magnétiques. Ensuite, le générateur de champ magnétique 79 associé attire les particules magnétiques contenues dans la cuvette de réaction 4 contre l'une des parois longitudinales de cette dernière, et le contenu de la cuvette de réaction 4, à l'exception des particules magnétiques, est aspiré hors de la cuvette de réaction 4, par exemple par l'un des dispositifs de prélèvement 71 ou par l'appareil de pipetage associé, et est introduit dans une autre cuvette de réaction, par exemple stockée dans le poste d'amplification PCR et de mesure 68, en vue d'une mesure optique ultérieure.

Selon une variante de réalisation de l'invention, l'incubateur 69 du poste d'amplification PCR et de mesure 68 pourrait être similaire à l'incubateur 46, et ainsi comporter un rotor d'incubation, et une partie de support fixe disposée sous le rotor d'incubation respectif et délimitant un chemin de déplacement annulaire et thermocyclé.

## Revendications

1. Système d'analyse automatique (1) pour diagnostic in vitro, comprenant :
- une pluralité de cuvettes de réaction (4) comprenant chacune une embase (6) et destinées à contenir des échantillons de liquides biologiques à analyser,
- un dispositif de stockage (3) configuré pour stocker la pluralité de cuvettes de réaction (4),
- au moins un poste de traitement d'échantillons (44, 57, 64, 68), comprenant au moins une cavité de réception (48, 59) configurée pour recevoir et loger au moins en partie une cuvette de réaction (4), l'au moins une cavité de réception (48, 59) comprenant une ouverture d'introduction inférieure (49, 60) débouchant vers le bas et configurée pour permettre l'introduction d'une cuvette de réaction (4) dans l'au moins une cavité de réception, et
- un dispositif de déplacement (22) configuré pour déplacer une cuvette de réaction (4), le dispositif de déplacement (22) étant en outre configuré pour décharger une cuvette de réaction (4) hors du dispositif de stockage (3) et pour charger et décharger une cuvette de réaction (4) dans et hors de l'au moins une cavité de réception (48, 59) de l'au moins un poste de traitement d'échantillons (44, 57, 64, 68) via l'ouverture d'introduction inférieure respective (49, 60),
le dispositif de déplacement (22) étant disposé sous l'au moins un poste de traitement d'échantillons et comprenant :
- un premier élément de support (23) monté mobile selon une première direction de déplacement (D1) sensiblement horizontale,
- un deuxième élément de support (24) monté mobile sur le premier élément de support (23) selon une deuxième direction de déplacement (D2) sensiblement horizontale et sensiblement orthogonale à la première direction de déplacement (D1), et
- un organe d'entraînement (25) monté mobile sur le deuxième élément de support (24) selon une troisième direction de déplacement (D3) sensiblement verticale, l'organe d'entraînement (25) étant configuré pour coopérer avec l'embase (6) d'une cuvette de réaction (4) et pour transmettre un mouvement d'entraînement à ladite cuvette de réaction (4).

2. Système d'analyse automatique (1) selon la revendication 1, dans lequel le dispositif de déplacement (22) est configuré pour déplacer une cuvette de réaction (5) selon des déplacements cartésiens.

3. Système d'analyse automatique (1) selon l'une quelconque des revendications 1 ou 2, dans lequel l'embase (6) de chaque cuvette de réaction (5) comprend un logement de réception (18) débouchant vers le bas, l'organe d'entraînement (25) étant configuré pour être reçu au moins en partie dans le logement de réception (18) d'une cuvette de réaction (4).

4. Système d'analyse automatique (1) selon l'une quelconque des revendications 1 à 3, dans lequel le dispositif de déplacement (22) comprend des moyens d'aspiration configurés pour retenir une cuvette de réaction (4) sur l'organe d'entraînement (25) lors des déplacements de ladite cuvette de réaction.

5. Système d'analyse automatique (1) selon l'une quelconque des revendications 1 à 4, dans lequel chaque cavité de réception (48, 59) comprend au moins un élément de retenue configuré pour retenir une cuvette de réaction (4) reçue dans ladite cavité de réception.

6. Système d'analyse automatique (1) selon l'une quelconque des revendications 1 à 5, dans lequel les cuvettes de réaction (4) destinées à être stockées dans le dispositif de stockage (3) sont reliées entre elles par un film d'obturation flexible (19) de manière à former une plaque de cuvettes de réaction, les cuvettes de réaction (4) de ladite plaque étant disposées en matrice, le film d'obturation flexible (19) obturant des ouvertures (10) desdites cuvettes de réaction (4).

7. Système d'analyse automatique (1) selon la revendication 6, dans lequel le film d'obturation flexible (19) comprend une pluralité de lignes de prédécoupe (20.1, 20.2) délimitant une pluralité de portions d'obturation (21), chaque portion d'obturation (21) obturant l'ouverture (10) d'une cuvette de réaction (4) respective.

8. Système d'analyse automatique (1) selon la revendication 7, dans lequel le dispositif de déplacement (22) est configuré pour soulever une cuvette de réaction (4) stockée dans le dispositif de stockage (3) de manière à rompre les lignes de prédécoupe (20.1, 20.2) délimitant la portion d'obturation (21) respective.

9. Système d'analyse automatique (1) selon la revendication 8, dans lequel le dispositif de stockage (3) comprend un organe de butée (34) comprenant un trou de passage (35), le dispositif de stockage (3) étant configuré de telle sorte que, lors du soulèvement d'une cuvette de réaction (5) stockée dans le dispositif de stockage (3) par le dispositif de déplacement (22), l'organe de butée (34) maintient en position les cuvettes de réaction (4) adjacentes à la cuvette de réaction soulevée et le trou de passage (35) autorise le passage d'au moins une partie de la cuvette de réaction soulevée.

10. Système d'analyse automatique (1) selon l'une quelconque des revendications 1 à 9, dans lequel chaque cuvette de réaction (4) comprend, sur chacune de ses parois latérales, au moins une nervure de positionnement (15) configurée pour coopérer avec une cuvette de réaction adjacente, de manière à ménager au moins un espace (16) entre les ouvertures (10) de deux cuvettes de réaction adjacentes.

11. Système d'analyse automatique (1) selon l'une quelconque des revendications 1 à 10, lequel comprend en outre un dispositif d'incubation (36) comprenant une pluralité de cavités d'incubation (37) configurées chacune pour recevoir et loger au moins en partie une cuvette de réaction (4), chaque cavité d'incubation (37) comprenant une ouverture d'introduction inférieure (38) débouchant vers le bas et configurée pour permettre l'introduction d'une cuvette de réaction (4) dans la cavité d'incubation (37) respective, le dispositif de déplacement (22) étant configuré pour charger et décharger une cuvette de réaction (4) dans et hors de chaque cavité d'incubation (37) via l'ouverture d'introduction inférieure (38) respective.

12. Système d'analyse automatique (1) selon la revendication 11, dans lequel le dispositif d'incubation (36) comprend une pluralité d'orifices de passage supérieurs (41) débouchant chacun dans une cavité d'incubation (37) respective, chaque orifice de passage supérieur (41) étant destiné au passage d'une aiguille de prélèvement (72) apte à alimenter chaque cuvette de réaction (4) reçue dans le dispositif d'incubation (36) en échantillons de liquide biologique à analyser et/ou en produits réactifs.

13. Système d'analyse automatique (1) selon la revendication 11 ou 12, dans lequel le dispositif d'incubation (36) comprend un élément d'immobilisation (41) monté mobile entre une position d'introduction dans laquelle des cuvettes de réaction (4) peuvent être chargées et déchargées dans et hors des cavités d'incubation (37), et une position d'immobilisation dans laquelle l'élément d'immobilisation empêche un retrait des cuvettes de réaction (4) hors des cavités d'incubation (37) respectives.

14. Système d'analyse automatique (1) selon l'une quelconque des revendications 1 à 13, dans lequel l'au moins un poste de traitement d'échantillons comporte au moins un dispositif parmi un dispositif de lecture photométrique, un dispositif de lecture par fluorescence, un dispositif de lecture par luminescence, un dispositif de mesure cytométrique et un dispositif de mesure de coagulation.

15. Système d'analyse automatique (1) selon l'une quelconque des revendications 1 à 14, dans lequel l'au moins un poste de traitement d'échantillons comporte un poste de lecture photométrique (44) comprenant un dispositif de lecture photométrique (45) et un incubateur (46) comportant une pluralité de cavités de réception (48) configurées chacune pour recevoir et loger au moins en partie une cuvette de réaction (4), le dispositif de lecture photométrique (44) étant apte à effectuer une lecture photométrique des cuvettes de réaction (4) reçues dans les cavités de réception (48) de l'incubateur (46).

16. Système d'analyse automatique (1) selon la revendication 15, dans lequel l'incubateur (46) comprend :
- un rotor d'incubation (47) d'axe de rotation sensiblement vertical et comportant la pluralité de cavités de réception (48) respectives,
- une partie de support fixe (53) disposée sous le rotor d'incubation (47), la partie de support fixe (53) délimitant un chemin de déplacement (54) dans lequel des cuvettes de réaction (4), reçues dans les cavités de réception prévues sur le rotor d'incubation (47), sont aptes à se déplacer sous l'action du rotor d'incubation (47), le chemin de déplacement (52) étant annulaire et ouvert vers le haut.

## Patentansprüche

1. Automatisches Analysesystem (1) für in vitro-Diagnostik, umfassend:
- eine Vielzahl von Reaktionsküvetten (4), umfassend jeweils eine Basis (6) und die bestimmt sind, Proben von zu analysierenden biologischen Flüssigkeiten zu enthalten,
- eine Lagervorrichtung (3), die konfiguriert ist, um die Vielzahl von Reaktionsküvetten (4) zu lagern,
- mindestens eine Probenbehandlungsstation (44, 57, 64, 68), umfassend mindestens eine Aufnahmekavität (48, 59), die konfiguriert ist, um eine Reaktionsküvette (4) mindestens teilweise aufzunehmen und unterzubringen, wobei die mindestens eine Aufnahmekavität (48, 59) eine untere Einführöffnung (49, 60) umfasst, die nach unten ausmündet und konfiguriert ist, um das Einführen einer Reaktionsküvette (4) in die mindestens eine Aufnahmekavität zu erlauben, und
- eine Verlagerungsvorrichtung (22), die konfiguriert ist, um eine Reaktionsküvette (4) zu verlagern, wobei die Verlagerungsvorrichtung (22) ferner konfiguriert ist, um eine Reaktionsküvette (4) aus der Lagervorrichtung (3) zu entnehmen und um eine Reaktionsküvette (4) in die mindestens eine Aufnahmekavität (48, 59) der mindestens einen Probenbehandlungsstation (44, 57, 64, 68) über die jeweilige untere Einführöffnung (49, 60) einzusetzen und daraus zu entnehmen,
wobei die Verlagerungsvorrichtung (22) unter der mindestens einen Probenbehandlungsstation angeordnet ist und umfasst:
- ein erstes Stützelement (23), das gemäß einer ersten etwa horizontalen Verlagerungsrichtung (D1) beweglich angebracht ist,
- ein zweites Stützelement (24), das auf dem ersten Stützelement (23) gemäß einer zweiten etwa horizontalen und zu der ersten Verlagerungsrichtung (D1) etwa orthogonalen Verlagerungsrichtung (D2) beweglich angebracht ist, und
- ein Antriebsorgan (25), das auf dem zweiten Stützelement (24) gemäß einer dritten etwa vertikalen Verlagerungsrichtung (D3) beweglich angebracht ist, wobei das Antriebsorgan (25) konfiguriert ist, um mit der Basis (6) einer Reaktionsküvette (4) zusammenzuwirken und um eine Antriebsbewegung auf die Reaktionsküvette (4) zu übertragen.

2. Automatisches Analysesystem (1) nach Anspruch 1, wobei die Verlagerungsvorrichtung (22) konfiguriert ist, um eine Reaktionsküvette (5) gemäß kartesischen Verlagerungen zu verlagern.

3. Automatisches Analysesystem (1) nach einem der Ansprüche 1 oder 2, wobei die Basis (6) jeder Reaktionsküvette (5) eine Empfangsaufnahme (18) umfasst, die nach unten ausmündet, wobei das Antriebsorgan (25) konfiguriert ist, um mindestens teilweise in der Empfangsaufnahme (18) einer Reaktionsküvette (4) aufgenommen zu sein.

4. Automatisches Analysesystem (1) nach einem der Ansprüche 1 bis 3, wobei die Verlagerungsvorrichtung (22) Ansaugmittel umfasst, die konfiguriert sind, um eine Reaktionsküvette (4) bei Verlagerungen der Reaktionsküvette auf dem Antriebsorgan (25) zu halten.

5. Automatisches Analysesystem (1) nach einem der Ansprüche 1 bis 4, wobei jede Aufnahmekavität (48, 59) mindestens ein Halteelement umfasst, das konfiguriert ist, um eine Reaktionsküvette (4), die in der Aufnahmekavität aufgenommen ist, zu halten.

6. Automatisches Analysesystem (1) nach einem der Ansprüche 1 bis 5, wobei die Reaktionsküvetten (4), die zum Lagern in der Lagervorrichtung (3) bestimmt sind, durch eine flexible Abdichtfolie (19) derart miteinander verbunden sind, dass eine Reaktionsküvettenplatte gebildet wird, wobei die Reaktionsküvetten (4) der Platte in einer Matrix angeordnet sind, wobei die flexible Abdichtfolie (19) Öffnungen (10) der Reaktionsküvetten (4) abdichtet.

7. Automatisches Analysesystem (1) nach Anspruch 6, wobei die flexible Abdichtfolie (19) eine Vielzahl vorgeschnittener Linien (20.1, 20.2) umfasst, die eine Vielzahl von Abdichtabschnitten (21) begrenzen, wobei jeder Abdichtabschnitt (21) die Öffnung (10) einer jeweiligen Reaktionsküvette (4) abdichtet.

8. Automatisches Analysesystem (1) nach Anspruch 7, wobei die Verlagerungsvorrichtung (22) konfiguriert ist, um eine in der Lagervorrichtung (3) gelagerte Reaktionsküvette (4) derart anzuheben, dass die vorgeschnittenen Linien (20.1, 20.2), die den jeweiligen Abdichtabschnitt (21) begrenzen, zerbrochen werden.

9. Automatisches Analysesystem (1) nach Anspruch 8, wobei die Lagervorrichtung (3) ein Anschlagorgan (34) umfasst, umfassend ein Durchgangsloch (35), wobei die Lagervorrichtung (3) derart konfiguriert ist, dass beim Anheben einer in der Lagervorrichtung (3) gelagerten Reaktionsküvette (5) durch die Verlagerungsvorrichtung (22) das Anschlagorgan (34) die zu der angehobenen Reaktionsküvette benachbarten Reaktionsküvetten (4) in Position hält und das Durchgangsloch (35) den Durchgang von mindestens einem Teil der angehobenen Reaktionsküvette gestattet.

10. Automatisches Analysesystem (1) nach einem der Ansprüche 1 bis 9, wobei jede Reaktionsküvette (4) auf jeder ihrer Seitenwände mindestens eine Positionierungsrippe (15) umfasst, die konfiguriert ist, um mit einer benachbarten Reaktionsküvette derart zusammenzuwirken, dass mindestens ein Raum (16) zwischen den Öffnungen (10) von zwei benachbarten Reaktionsküvetten ausgebildet wird.

11. Automatisches Analysesystem (1) nach einem der Ansprüche 1 bis 10, das ferner eine Inkubationsvorrichtung (36) umfasst, umfassend eine Vielzahl von Inkubationskavitäten (37), die jeweils konfiguriert sind, um eine Reaktionsküvette (4) mindestens teilweise aufzunehmen und unterzubringen, wobei jede Inkubationskavität (37) eine untere Einführöffnung (38) umfasst, die nach unten ausmündet und konfiguriert ist, um das Einführen einer Reaktionsküvette (4) in die jeweilige Inkubationskavität (37) zu erlauben, wobei die Verlagerungsvorrichtung (22) konfiguriert ist, um eine Reaktionsküvette (4) in jede Inkubationskavität (37) über die jeweilige untere Einführöffnung (38) einzusetzen und daraus zu entnehmen.

12. Automatisches Analysesystem (1) nach Anspruch 11, wobei die Inkubationsvorrichtung (36) eine Vielzahl von oberen Durchgangslöchern (41) umfasst, die jeweils in eine jeweilige Inkubationskavität (37) ausmünden, wobei jedes obere Durchgangsloch (41) für den Durchgang einer Pipettiernadel (72) bestimmt ist, die imstande ist, jede der in der Inkubationsvorrichtung (36) aufgenommene Reaktionsküvette (4) mit Proben von zu analysierender biologischer Flüssigkeit und/oder mit Reaktionsprodukten zu versorgen.

13. Automatisches Analysesystem (1) nach Anspruch 11 oder 12, wobei die Inkubationsvorrichtung (36) ein Feststellelement (41) umfasst, das zwischen einer Einführposition, in welcher Reaktionsküvetten (4) in Inkubationskavitäten (37) einsetzbar und daraus entnehmbar sind, und einer Feststellposition, in welcher das Feststellelement ein Herausnehmen der Reaktionsküvetten (4) aus den jeweiligen Inkubationskavitäten (37) verhindert, beweglich angebracht ist.

14. Automatisches Analysesystem (1) nach einem der Ansprüche 1 bis 13, wobei die mindestens eine Probenbehandlungsstation mindestens eine Vorrichtung von einer photometrischen Lesevorrichtung, einer Lesevorrichtung durch Fluoreszenz, einer Lesevorrichtung durch Lumineszenz, einer zytometrischen Messvorrichtung und einer Koagulationsmessvorrichtung aufweist.

15. Automatisches Analysesystem (1) nach einem der Ansprüche 1 bis 14, wobei die mindestens eine Probenbehandlungsstation eine photometrische Lesestation (44) aufweist, umfassend eine photometrische Lesevorrichtung (45) und einen Inkubator (46), aufweisend eine Vielzahl von Aufnahmekavitäten (48), die jeweils konfiguriert sind, um eine Reaktionsküvette (4) mindestens teilweise aufzunehmen und unterzubringen, wobei die photometrische Lesevorrichtung (44) imstande ist, die in den Aufnahmekavitäten (48) des Inkubators (46) aufgenommenen Reaktionsküvetten (4) photometrisch zu lesen.

16. Automatisches Analysesystem (1) nach Anspruch 15, wobei der Inkubator (46) umfasst:
- einen Inkubationsrotor (47) mit einer etwa vertikalen Rotationsachse, aufweisend die Vielzahl jeweiliger Aufnahmekavitäten (48),
- einen festen Stützteil (53), der unter dem Inkubationsrotor (47) angeordnet ist, wobei der feste Stützteil (53) einen Verlagerungsweg (54) begrenzt, auf welchem auf dem Inkubationsrotor (47) in den Aufnahmekavitäten aufgenommene Reaktionsküvetten (4) imstande sind, sich unter der Wirkung des Inkubationsrotors (47) zu verlagern, wobei der Verlagerungsweg (52) ringförmig und nach oben geöffnet ist.

## Claims

1. An automatic analysis system (1) for in vitro diagnostics, comprising:
- a plurality of reaction cuvettes (4) each comprising a base (6) and intended to contain biological liquids samples to analyze,
- a storage device (3) configured to store the plurality of reaction cuvettes (4),
- at least one samples processing station (44, 57, 64, 68), comprising at least one receiving cavity (48, 59) configured to receive and house at least partially one reaction cuvette (4), the at least one receiving cavity (48, 59) comprising a lower introduction opening (49, 60) which opens downward and which is configured to enable the introduction of a reaction cuvette (4) into the at least one receiving cavity, and
- a displacement device (22) configured to displace a reaction cuvette (4), the displacement device (22) being further configured to unload a reaction cuvette (4) out of the storage device (3) and to load and unload a reaction cuvette (4) into and out of the at least one receiving cavity (48, 59) of the at least one samples processing station (44, 57, 64, 68) via the respective lower introduction opening (49, 60),
the displacement device (22) being disposed under the at least one samples processing station and comprising:
- a first support element (23) movably mounted according to a first direction of displacement (D1) which is substantially horizontal,
- a second support element (24) movably mounted on the first support element (23) according to a second direction of displacement (D2) which is substantially horizontal and whish is substantially orthogonal to the first direction of displacement (D1), and
- a drive member (25) movably mounted on the second support element (24) according to a third direction of displacement (D3) which is substantially vertical, the drive member (25) being configured to cooperate with the base (6) of a reaction cuvette (4) and to transmit a drive movement to said reaction cuvette (4).

2. The automatic analysis system (1) according to claim 1, wherein the displacement device (22) is configured to displace a reaction cuvette (4) according to Cartesian displacements.

3. The automatic analysis system (1) according to any one of claims 1 or 2, wherein the base (6) of each reaction cuvette (4) comprises a receiving housing (18) opening downward, the drive member (25) being configured to be received at least partially in the receiving housing (18) of a reaction cuvette (4).

4. The automatic analysis system (1) according to any one of claims 1 to 3, wherein the displacement device (22) comprises suction means configured to retain a reaction cuvette (4) on the drive member (25) during the displacements of said reaction cuvette.

5. The automatic analysis system (1) according to any one of claims 1 to 4, wherein each receiving cavity (48, 59) comprises at least one retaining element configured to retain a reaction cuvette (4) received in said receiving cavity.

6. The automatic analysis system (1) according to any one of claims 1 to 5, wherein the reaction cuvettes (4) intended to be stored in the storage device (3) are connected to each other by a flexible sealing film (19) so as to form a reaction cuvettes plate, the reaction cuvettes (4) of said plate being disposed in a matrix-like fashion, the flexible sealing film (19) sealing openings (10) of said reaction cuvettes (4).

7. The automatic analysis system (1) according to claim 6, wherein the flexible sealing film (19) comprises a plurality of score lines (20.1, 20.2) delimiting a plurality of sealing portions (21), each sealing portion (21) sealing the opening (10) of a respective reaction cuvette (4).

8. The automatic analysis system (1) according to claim 7, wherein the displacement device (22) is configured to lift up a reaction cuvette (4) stored in the storage device (3) so as to break up the score lines (20.1, 20.2) delimiting the respective sealing portion (21).

9. The automatic analysis system (1) according to claim 8, wherein the storage device (3) comprises a stop member (34) comprising a passage hole (35), the storage device (3) being configured such that, during the lifting of a reaction cuvette (4) stored in the storage device (3) by the displacement device (22), the stop member (34) holds in position the reaction cuvettes (4) adjacent to the lifted reaction cuvette and the passage hole (35) enables the passage of at least one portion of the lifted reaction cuvette.

10. The automatic analysis system (1) according to any one of claims 1 to 9, wherein each reaction cuvette (4) comprises, on each of its lateral walls, at least one positioning rib (15) configured to cooperate with an adjacent reaction cuvette, so as to form at least one space (16) between the openings (10) of two adjacent reaction cuvettes.

11. The automatic analysis system (1) according to any one of claims 1 to 10, which further comprises an incubation device (36) comprising a plurality of incubation cavities (37) each configured to receive and house at least partially one reaction cuvette (4), each incubation cavity (37) comprising a lower introduction opening (38) which opens downward and which is configured to enable the introduction of a reaction cuvette (4) into the respective incubation cavity (37), the displacement device (22) being configured to load and unload a reaction cuvette (4) into and out of each incubation cavity (37) via the respective lower introduction opening (38).

12. The automatic analysis system (1) according to claim 11, wherein the incubation device (36) comprises a plurality of upper passage orifices (41) each opening into a respective incubation cavity (37), each upper passage orifice (41) being intended to the passage of a collection needle (72) capable of supplying each reaction cuvette (4) received in the incubation device (36) with biological liquid samples to analyze and/or with reagent products.

13. The automatic analysis system (1) according to claim 11 or 12, wherein the incubation device (36) comprises an immobilization element (41) movably mounted between an introduction position in which reaction cuvettes (4) can be loaded and unloaded into and out of the incubation cavities (37), and an immobilization position in which the immobilization element prevents a removal of the reaction cuvettes (4) out of the respective incubation cavities (37).

14. The automatic analysis system (1) according to any one of claims 1 to 13, wherein the at least one samples processing station includes at least one device among a photometric reading device, a fluorescence reading device, a luminescence reading device, a cytometric measurement device and a coagulation measurement device.

15. The automatic analysis system (1) according to any one of claims 1 to 14, wherein the at least one samples processing station includes a photometric reading station (44) comprising a photometric reading device (45) and an incubator (46) including a plurality of receiving cavities (48) each configured to receive and house at least partially one reaction cuvette (4), the photometric reading device (44) being capable of performing a photometric reading of the reaction cuvettes (4) received in the receiving cavities (48) of the incubator (46).

16. The automatic analysis system (1) according to claim 15, wherein the incubator (46) comprises:
- an incubation rotor (47) with a substantially vertical axis of rotation and including the plurality of respective receiving cavities (48),
- a fixed support portion (53) disposed under the incubation rotor (47), the fixed support portion (53) delimiting a displacement track (54) in which reaction cuvettes (4), received in the receiving cavities provided on the incubation rotor (47), can be displaced by the action of the incubation rotor (47), the displacement track (52) being annular and open at the top.
